# EUROPÄISCHE PATENTSCHRIFT

(11) **EP 3 450 593 B1**
(45) Veröffentlichungstag und Bekanntmachung des Hinweises auf die Patenterteilung: **09.09.2020**
(21) Anmeldenummer: 18188344.8
(22) Anmeldetag: 09.08.2018
(51) Int. Cl.: C25D 21/12, G01N 9/00, C23C 18/16, G01G 3/16, C25D 11/04, C23C 18/32, C23C 18/38

(54) **VERFAHREN UND SENSOREINRICHTUNG ZUR STÖRUNGSKOMPENSIERTEN BESTIMMUNG DES MATERIALAUFTRAGS ODER -ABTRAGS WÄHREND NASSCHEMISCHER PROZESSE**
METHOD AND SENSOR DEVICE FOR INTERFERENCE-COMPENSATED DETECTION OF THE MATERIAL APPLICATION OR REMOVAL DURING WET CHEMICAL PROCESSES
PROCÉDÉ ET DISPOSITIF CAPTEUR DESTINÉS À LA DÉTERMINATION À COMPENSATION DE PERTURBATIONS DE L'APPLICATION OU DE L'ENLÈVEMENT DE MATIÈRE PENDANT LES PROCESSUS CHIMIQUES HUMIDES

(30) Priorität: 29.08.2017 DE 102017119804
(43) Veröffentlichungstag der Anmeldung: 06.03.2019
(73) Patentinhaber: Collini Holding AG, 6845 Hohenems (AT)
(72) Erfinder: Dr. Giebler, Eckart, 01159 Dresden (DE); Reich, Andy, 01219 Dresden (DE)
(74) Vertreter: Kaufmann, Sigfrid

(56) Entgegenhaltungen:
- EP-A1- 2 447 683
- EP-A2- 1 577 667
- EP-A2- 2 495 357
- WO-A1-91/17423

## Beschreibung

Die Erfindung betrifft ein Verfahren und eine Sensoreinrichtung zur störungskompensierten Onlinemessung von Masse und Geschwindigkeit der Schichtabscheidung oder des Materialabtrags in nasschemischen Prozessen, sowie eine Verwendung der Sensoreinrichtung.

Durch elektrochemische Vorgänge werden aus meist wässrigen Lösungen auf zu veredelnden Werkstücken bzw. Bauteilen Schichten abgeschieden. Diese allgemein als galvanotechnische Prozesse bezeichneten Verfahren werden in galvanische und außenstromlose Verfahren unterteilt. Bei galvanischen Verfahren wird die Beschichtung durch einen von außen eingeprägten Strom bewirkt, das heißt das Werkstück wird als Kathode geschaltet und gemeinsam mit einer Anode in den Elektrolyt eingebracht. Dabei kommt es zu einem elektrischen Stromfluss, der die Abscheidung an der Werkstückoberfläche bewirkt. Im Gegensatz dazu wird bei den außenstromlosen, auch chemisch genannten Verfahren die Abscheidung auf der Werkstückoberfläche durch in der Prozesslösung befindliche Reduktionsmittel bewirkt, die die zur Abscheidung nötigen Elektronen liefern.

Neben der Beschichtung werden nasschemische Behandlungsprozesse auch zum Materialabtrag verwendet. Die entsprechenden Abtragsverfahren dienen der Entfernung unerwünschter Deckschichten, dem Materialabtrag zum Beispiel bei Strukturierungsprozessen sowie der gezielten Veränderung chemisch-physikalischer Eigenschaften wie zum Beispiel der Oberflächenrauigkeit.

Die prozessbegleitende Überwachung der Abscheidung oder des Abtrags findet in der industriellen Praxis nur sehr eingeschränkt statt. Ursache ist das Fehlen geeigneter Prozessmesstechnik, die eine Onlineüberwachung der Abscheide- oder Abtragsprozesse ermöglicht. Hingegen kommen verschiedene Messmethoden vorwiegend nach der Beschichtung oder des Abtrags zum Einsatz, die meist per Hand im Rahmen der Qualitätssicherung durchgeführt werden.

An sensiblen Beschichtungsprozessen kommen ergänzend Probekörperverfahren zum Einsatz. Dabei werden Referenzmuster, wie beispielweise Probebleche, parallel zum Werkstück für eine definierte Zeit mitbeschichtet. Die Abscheidegeschwindigkeit wird durch Wägung der Massedifferenz oder durch Schichtdickenmessung (Röntgenfluoreszenz, Schliffe, Messuhr) ermittelt. Der Vorteil solcher Probekörperverfahren ist der relativ geringe gerätetechnische Aufwand; meist kann vorhandene Technik genutzt werden. Nachteilig sind auch hier der personelle Aufwand, der Stichprobencharakter und der Zeitverzug bei der entsprechenden Ermittlung der Abscheidegeschwindigkeit. Hinzu kommt, dass die Abscheidegeschwindigkeit immer nur als Mittelwert für die Zeitdauer der Beschichtung des Probekörpers bestimmt wird. Sollen Veränderungen verfolgt werden, müssen die Beschichtungsdauer verkürzt und die Anzahl der beschichteten Probekörper erhöht werden. Der Handling- und Materialaufwand wird entsprechend höher. Bei Differenzmessungen von Gewicht oder Schichtdicke wird außerdem die erreichbare Messgenauigkeit insbesondere dann problematisch, wenn die Differenzen bei kurzen Beschichtungszeiten entsprechend gering werden.

Die messtechnische Überwachung nasschemischer Abtragsprozesse gestaltet sich ebenfalls aufwändig. Auch hier wird teils mit Probekörperverfahren gearbeitet, bei denen Referenzköper parallel zum Werkstück in den Abtragsprozess eingebracht werden. Die Ermittlung des in einer definierten Zeit erfolgten Materialabtrags erfolgt dann zum Beispiel durch Wägung oder durch geometrische Vermessung zum Beispiel mit einer Messuhr.

Ein Verfahren und eine Einrichtung zur Onlinemessung der Abscheide- und Abtragsgeschwindigkeit in nasschemischen Prozessen ist in EP 2 495 357 beschrieben. Hierbei wird ein longitudinal schwingender Stabsensor in den nasschemischen Prozess eingebracht. An der Stabspitze kommt es zu einer Materialabscheidung bzw. zu einem Materialabtrag. Die dadurch bewirkte Masseänderung führt zur Änderung der Resonanzfrequenz des Sensorstabes. Die in EP 2 495 357 dargestellte Einrichtung umfasst eine Phasendetektion zwischen angeregter und rückgemessener Schwingung und eine darauf basierende Phasenregelung. Diese realisiert eine fortlaufende Schwingung des Sensorstabes in seiner Resonanzfrequenz. Somit bildet die Resonanzfrequenz die Masse bzw. Masseänderung an der Spitze des Sensorstabes kontinuierlich ab.

Beim Einsatz einer Sensorik entsprechend EP 2 495 357 in industriellen Anwendungen treten verschiedene Störeffekte auf. So beeinflusst die Temperatur das Schwingungsverhalten. Die Ursache liegt in der Veränderung von Stoffeigenschaften des Schwingungssystems. So ändern sich beispielsweise die Dichte und der E-Modul und somit die Ausbreitungsgeschwindigkeit der Deformationswelle im Sensorstab in Abhängigkeit von der Temperatur. Daraus folgt unmittelbar eine Verschiebung der Resonanzfrequenz des Longitudinalschwingers. Weiterhin können Temperatureinflüsse im Bereich der Schwingungsanregung wirken. So kann sich die mechanische Verspannung des schwingungserzeugenden bzw. schwingungserfassenden Elementes durch temperaturbedingte Materialausdehnung oder -kontrakation verändern.

Um eine Verfälschung des Messergebnisses durch Temperaturänderungen zu verhindern, findet gemäß EP 2 495 357 eine Temperaturkompensation statt. Dazu wird im Sensorstab die Temperatur mit einem geeigneten Sensor gemessen. Durch entsprechende Vorversuche wird die Temperaturabhängigkeit der Resonanzfrequenz ermittelt. Während der Messung wird dann die sich aus der gemessenen Temperatur berechnete Störfrequenzverschiebung von der gemessenen Resonanzfrequenz subtrahiert, sodass sich eine temperaturkompensierte Messfrequenz ergibt.

Diese Temperaturkompensation funktioniert gut für den stationären Fall. Das bedeutet, dass beim Übergang von einer Temperatur zu einer anderen nach Abklingen aller Temperaturtransienten im Sensor eine gute Kompensation der temperaturbedingten Störfrequenzverschiebung möglich ist. Grenzen der Temperaturkompensation zeigen sich jedoch während der transienten Vorgänge infolge der Temperaturänderung. Das heißt, während der Sensor sich aufheizt oder abkühlt, treten Störfrequenzverschiebungen auf, die mit einer einfachen Kompensation nicht erfasst werden.

Einen weiteren praktisch relevanten Störeffekt stellen Gasblasen dar, die sich im flüssigen Medium, welches den Sensorstab unmittelbar umgibt, befinden. Das wird dadurch verursacht, dass die Schwingung des Sensorstabes zu einer Anregung des umgebenden Mediums führt. Die in Längsrichtung schwingende Staboberfläche ruft eine Scherschwingung hervor, die in das umgebende Medium eindringt. Das so angeregte Medium bildet eine mitschwingende Masse, die eine äußere Dämpfungskraft für das Schwingungssystem darstellt. Entsprechend werden das Frequenz- und das Amplitudenverhalten des Schwingungssystems gegenüber einer ungestörten Schwingung des Stabes im Vakuum verändert. Der Einfluss des umgebenden Mediums auf die Schwingung des Stabes hängt neben der Eindringtiefe der Schwingung insbesondere von Stoffkonstanten des Mediums ab. Hier wirken Dichte, Viskosität, Kompressibilität sowie elastische Eigenschaftes des umgebenden Mediums. Entsprechend zeigen sich unterschiedliche Resonanzschwingungen des Stabsensors in Luft, in Wasser bzw. in einer wässrigen Lösung. Zum Bespiel zeigten sich bei einem Stabsensor, der entsprechend seiner Ausgestaltung eine Resonanzfrequenz von ca. 11,7 kHz aufweist, beim Eintauchen in Wasser eine Verringerung der Resonanzfrequenz um ca. 16 bis 20 Hz.

Kommt es während der Messung zu einer deutlichen Änderung von Eigenschaften des umgebenden Mediums, verschiebt sich die Resonanzfrequenz entsprechend. Genau diese Situation tritt auf, wenn in der den Sensor umgebenden Flüssigkeit Gasblasen auftauchen, die bei vielen Beschichtungs- oder Abtragsprozessen entstehen können. Gasblasen in der Flüssigkeit bedeuten ein Flüssigkeit-Gas-Gemisch, das summarisch gesehen andere Stoffeigenschaften als die gasfreie Flüssigkeit aber auch andere Eigenschaften als das reine Gas aufweist. Entsprechend ist beim Auftreten von Gasblasen in der den Sensorstab umgebenden Flüssigkeit ein Anstieg der Resonanzfrequenz zu beobachten.

Zur Erkennung von Gasblaseneinflüssen ist der Einsatz spezieller Filteralgorithmen zur Filterung des Resonanzfrequenzsignals bekannt. Hierbei wird die Tatsache genutzt, dass Gasblasen zur Erhöhung der Resonanzfrequenz führen. Bei der Messung an Abscheideprozessen sind solche Situationen prinzipiell erkennbar, da eine Erhöhung der Resonanzfrequenz bei Massezunahme am Sensor nicht auftreten kann. Schwieriger zu erkennen sind hingegen Ausgasvorgänge. Die entsprechende Frequenzverringerung muss bei Beschichtungsprozessen von der Frequenzänderung durch die Massezunahme am Sensor unterschieden werden. Um eine gute Mustererkennung für das Auftreten oder Verschwinden von Gasblaseneffekten zu erreichen, müssen die entsprechenden Filteralgorithmen an die konkreten Prozessbedingungen angepasst werden. Das heißt, anhand praktischer Messungen sind in den Filteralgorithmen enthaltene Parameter geeignet einzustellen. Somit ist im Rahmen der Inbetriebnahme der Messung an einem konkreten Prozess, eine entsprechende Parameteroptimierung erforderlich.

Der Erfindung liegt die Aufgabe zugrunde, ein Verfahren und eine Sensoreinrichtung zur Messung der Masseveränderung bei der Oberflächenbehandlung, das heißt Schichtabscheidung oder Materialabtrag, in nasschemischen Prozessen zu realisieren, die eine Onlinemessung unter rauen industriellen Bedingungen mit einer wirkungsvollen und robusten Kompensation von Störungen ermöglichen und breit einsetzbar sein soll, wobei insbesondere Störungen kompensiert werden sollen, die durch schnelle Temperaturänderungen im Oberflächenbehandlungsprozess oder den Einfluss von Gasblasen verursacht werden, sodass eine verzögerungsarme Störkompensation möglich wird. Durch vorteilhafte Ausgestaltungen sollen darüber hinaus auch weitere Einflüsse beispielsweise durch Strömung der umgebenden Flüssigkeit, durch Reflektion von Schallwellen oder durch Änderungen von Konzentrationen der sich im umgebenden Medium befindlichen Stoffe kompensierbar sein.

Die Lösung dieser Aufgabe erfolgt durch ein Verfahren gemäß Patentanspruch 1 und eine Sensoreinrichtung gemäß Patentanspruch 6; zweckmäßige Ausgestaltungen der Erfindung finden sich in den Unteransprüchen. Eine vorteilhafte Verwendung der Sensoreinrichtung ist in Anspruch 11 aufgezeigt.

Der Begriff "Bestimmung des Materialauftrags oder -abtrags" bezeichnet hierin eine Messung sowohl der Änderung der Masse bzw. Schichtdicke, die insbesondere auch eine aufgebrachte bzw. entfernte Materialmasse oder Schichtdicke einschließt, als auch die Ermittlung der Abscheide- bzw. Abtragsgeschwindigkeit.

Zur erfindungsgemäßen Bestimmung des Materialauftrags oder -abtrags, das heißt Onlinemessung der Masse und/oder ihrer Änderungsrate, beim Beschichten oder Abtragen von Oberflächen wird ein Sensor, im Folgenden Oberflächenbehandlungs-Sensor genannt, verwendet, der eine probekörperbasierte Erfassung der Masseänderungen im Oberflächenbehandlungsprozess ermöglicht. Das Herzstück dieses Oberflächenbehandlungs-Sensors ist ein Sensorstab, der in die Prozesslösung des Oberflächenbehandlungsprozesses parallel zu dem zu behandelnden Werkstück eingetaucht wird. An einem ersten Endbereich des Sensorstabes befindet sich ein Sensorkopf, der eine geeignete Ankopplung eines schwingungsanregenden Elementes, im Folgenden Schwingungserregungseinrichtung genannt, sowie eines Elementes zur Rückmessung der sich im Sensorstab einstellenden Schwingung, im Folgenden Schwingungsmessaufnehmer genannt, ermöglicht. Am zweiten Endbereich des Sensorstabes, das heißt der Sensorspitze, ist ein Probekörper befestigt. Mittels der Schwingungserregungseinrichtung wird der Sensorstab zu einer longitudinalen Schwingung angeregt, sodass er in seiner Resonanzfrequenz schwingt oder aus der Schwingungscharakteristik die Resonanzfrequenz des Schwingungssystems ermittelt werden kann. Diese Schwingungsanregung kann piezoelektrisch, magnetostriktiv oder mechanisch erfolgen. Bei piezoelektrischer Anregung können zum Beispiel piezoelektrische Dickenschwinger zum Einsatz kommen. Am Probekörper findet ein zum Werkstück paralleler Oberflächenbehandlungsprozess, das heißt Abscheide- oder Abtragsprozess, statt, wodurch sich die Masse des Stabschwingers verändert. Das hat eine Änderung der Resonanzfrequenz zur Folge. Der Sensorstab hingegen ist gegenüber dem Oberflächenbehandlungsprozess inert, das heißt, er ist so gestaltet, dass dort keine Abscheidung bzw. kein Abtrag stattfindet. Dazu wird der Sensorstab vorzugsweise mit einer geeigneten - zum Beispiel einer nicht leitenden - Schutzschicht überzogen, auf der keine Abscheidung möglich ist oder die von der umgebenden Prozesslösung nicht angegriffen wird. Der Probekörper ist vorzugsweise lösbar, das heißt form- oder kraftschlüssig, mit der Sensorspitze verbunden. Das ermöglicht, bei Bedarf einen einfachen Ersatz des alten Probekörpers durch einen neuen.

Verfahrensgemäß wird die Resonanzfrequenz fortlaufend ermittelt. Da der Zusammenhang zwischen Resonanzfrequenz und Masse prinzipiell bekannt ist, kann aus der gemessenen Resonanzfrequenz die Änderung der Masse des Stabschwingers kontinuierlich berechnet werden.

Die Resonanzfrequenz wird jedoch auch von weiteren Größen beeinflusst. So hat die Temperatur einen erheblichen Einfluss auf die Resonanzfrequenz. Weiterhin wirkt das Medium, das den schwingenden Stab umgibt, auf die Resonanzschwingung. So stellt sich in einem flüssigen Medium eine andere Resonanzfrequenz als in einem gasförmigen Medium ein. Entsprechend verschiebt sich die Resonanzfrequenz auch, wenn in der Flüssigkeit um den Sensor Gasblasen auftreten. Über Temperatur und Gasblasen hinaus können Stoffeigenschaften des den Sensor umgebenden Mediums als Störeinflüsse auf die Resonanzfrequenz wirken. So beeinflusst zum Beispiel die Viskosität und die Kompressibilität des Fluids das Schwingungsverhalten des Stabschwingers. Die entsprechenden Fluideigenschaften hängen wiederum von den Konzentrationen von Stoffen ab, die sich in gelöster oder in disperser Form oder auch als Partikel in der Flüssigkeit befinden.

Um nun eine Verfälschung der Massemessung durch eine entsprechend gestörte Resonanzfrequenz zu vermeiden, werden erfindungsgemäß Störeinflüsse gezielt erfasst. Auf Basis dieser Erfassung können Störfrequenzanteile der Frequenzverschiebung ermittelt werden. Somit ist eine Kompensation der durch die Störungen bewirkten Verschiebung der Resonanzfrequenz, im Folgenden Störfrequenzverschiebung genannt, möglich.

Es kann vorgesehen sein, unterschiedliche Störeinflüsse mit separaten Sensoren zu erfassen. Für die gemessenen Störeinflüsse werden getrennte Verschiebungsanteile der Resonanzfrequenz berechnet. Diese dienen dazu, die durch die Masseänderung verursachte Resonanzfrequenzverschiebung aus der gestörten Messung der Resonanzfrequenz zu errechnen. Eine getrennte messtechnische Erfassung von Störgrößen ist insbesondere für die Temperatur und für die im flüssigen Medium enthaltenen Gasblasen vorteilhaft, da diese in der industriellen Praxis die wesentlichen Störanteile bei der Onlinemessung der Masseänderung darstellen. Für die Erfassung der Gasblasen ist dabei eine fotometrische Erfassung vorteilhaft.

Alternativ kann vorgesehen sein, alle Störungen summarisch zu erfassen. Dazu erfolgt eine umfassende Erfassung von Störeinflüssen mit einem Referenzsensor, der gleichartig wie der zur Beschichtung oder zum Abtrag dienende Stabsensor gestaltet ist. Der Referenzsensor wird dabei allerdings so gestaltet bzw. so betrieben, dass an dessen Sensorspitze (Probekörper) weder eine Beschichtung noch ein Abtrag stattfindet. Somit gibt es dort keine Frequenzverschiebung durch Masseänderung. Da der Referenzsensor jedoch in unmittelbarer Nähe des Oberflächenbehandlungs-Sensors, nachfolgend Hauptsensor genannt, eingesetzt wird, wirken weitgehend die gleichen Störungen und folglich kommt es zu entsprechenden Störverschiebungen der Resonanzfrequenz. Die am Referenzsensor gemessenen Änderungen der Resonanzfrequenz können somit genutzt werden, um die durch die Masseänderung verursachte Resonanzfrequenzverschiebung aus der gestörten Messung der Resonanzfrequenz am Oberflächenbehandlungs-Sensor zu errechnen. Entsprechend der Erfindung gibt es verschiedene vorteilhafte Gestaltungsmöglichkeiten, um eine Beschichtung oder einen Abtrag am Referenzsensor zu verhindern. Während das bei galvanischen Verfahren im Allgemeinen durch einen fehlenden Elektrolysestrom am Referenzsensor erreicht werden kann, kann für chemische (außenstromlose) Verfahren die Oberfläche an der Spitze des Referenzsensors (Probekörper) geeignet passiviert bzw. beständig gegen chemischen Angriff gestaltet werden. Möglich ist auch der Einsatz eines elektrischen Schutzpotentials.

Der Vorteil der Erfindung ist eine systematische Kompensation von Störeinflüssen für die Onlinemessung von Masse und Geschwindigkeit bei der Beschichtung oder beim Materialabtrag in nasschemischen Prozessen mit einem longitudinal schwingenden Stabsensor. Während beim Stand der Technik an solchen Stabsensoren lediglich die Temperatur gemessen und kompensiert wird, bietet das erfindungsgemäße Verfahren die Möglichkeit, auch darüber hinausgehende Störung mit geeigneten Einrichtungen systematisch zu erfassen und zu kompensieren. Insbesondere werden Störungen durch Gasblasen wirkungsvoll kompensiert. Bei Verfahren aus dem Stand der Technik kann deren beim industriellen Einsatz relevanten Quereinflüssen nur mit einer geeigneten Signalverarbeitung entgegengewirkt werden. Mit der erfindungsgemäßen messtechnischen Erfassung der Gasblasen ist eine robustere und weniger prozessspezifische Kompensation der Gasblasenwirkung möglich.

Die Verwendung eines Doppelsensors bietet über die Kompensation einzelner Störungen hinaus erstmalig die Möglichkeit, für die Onlinemessung von Masse und Geschwindigkeit bei der Beschichtung oder beim Materialabtrag in nasschemischen Prozessen eine umfassende Kompensation von in der Praxis auftretenden Störungen zu realisieren, da hierbei die Störfrequenzverschiebung als Summe aller Störungen direkt gemessen wird.

Die Erfindung ermöglicht für die Onlinemessung von Masse und Geschwindigkeit bei der Beschichtung oder beim Materialabtrag in nasschemischen Prozessen eine höhere Genauigkeit der Messung in stark gestörter Industrieumgebung. Bisher bewirken beim Einsatz eines longitudinal schwingenden Stabsensors verschiedene Störeinflüsse eine Verschiebung der Resonanzfrequenz des Sensors. Während der Onlinemessung führt das zu Messabweichungen der aus der Resonanzfrequenzänderung berechneten Masseänderung. Entsprechend ergeben sich Abweichungen bei der gemessenen Schichtdicke der abgeschiedenen oder abgetragenen Schicht. Mit dem erfindungsgemäßen Verfahren werden nun die Ursachen von Störungen messtechnisch erfasst und deren Quereinflüsse auf die kontinuierlich gemessene Resonanzfrequenz kompensiert.

Bisherig angewendete Techniken zur Verringerung von Störeinflüssen wirken häufig verzögert. So müssen algorithmische Ansätze zur Störerkennung die Störmuster eine gewisse Zeit zulassen, um eine eindeutige Identifikation zu ermöglichen und die Störungen dann zu kompensieren. Während dieser Zeit zur Störerkennung treten transiente Messabweichungen auf. Diese wirken als Messabweichungen für die gemessene Masse und Schichtdicke. Darüber hinaus ist bei in Ihrer Form und Fläche stark schwankenden Werkstücken eine häufige Parameteranpassung nötig. Mit dem erfindungsgemäßen Verfahren treten derartige transiente Störungen nicht auf, da die Störungen direkt messtechnisch erfasst werden und nicht erst im Signal der kontinuierlich gemessenen Resonanzfrequenz erkannt werden müssen. Somit ergibt sich eine robustere Kompensation von zum Beispiel Gasblaseneinflüssen, die auch bei in Ihrer Form und Fläche stark schwankenden Werkstücken funktioniert. Außerdem entfällt der Aufwand zur Parametrierung der speziellen Algorithmen im Rahmen der Inbetriebnahme oder bei der Optimierung der Messung.

Insbesondere bei schnellen Temperaturänderungen über größere Bereiche bietet die Ausgestaltung der Erfindung als Doppelsensor einen besonderen Vorteil. Da beide Sensoren die Temperaturänderungen in gleicher Weise erfahren, werden die Störungen durch Temperaturänderungen genau zeitgleich erfasst. Der Referenzsensor ermöglicht somit eine zeitlich exakte Kompensation von Temperatureinflüssen.

Die zur Durchführung des erfindungsgemäßen Verfahrens vorgesehene Sensoreinrichtung zur Onlinemessung der Masse und der Geschwindigkeit bei der Abscheidung oder beim Abtrag von Oberflächen weist weiterhin eine Steuer- und Regeleinrichtung auf. Diese Steuer- und Regeleinrichtung ist vorzugsweise in einem gemeinsamen Gehäuse in unmittelbarer Nähe zum Sensorstab angeordnet. Alternativ ist aber auch eine örtlich getrennte Anordnung der Steuer- und Regeleinrichtung außerhalb des Sensorgehäuses möglich. Die Steuer- und Regeleinrichtung dient dazu, eine auf die Geometrie des Stabschwingers abgestimmte Schwingungsanregung zu erzeugen, sodass eine stehende Welle entsteht, bei der sich der Schwingungsknoten im Sensorkopf und das Amplitudenmaximum an der Sensorspitze bzw. am Probekörper ausbildet. Das bedeutet, dass der Sensorstab in seiner Resonanzfrequenz fo bevorzugt der ersten longitudinalen Eigenschwingungsmode oder in deren unmittelbarer Nähe angeregt wird. Weiterhin sorgt die Steuer- und Regeleinrichtung fortlaufend dafür, dass die aktuelle Resonanzfrequenz fo(t) des Stabschwingers ermittelt wird. Dazu wird vorzugsweise ein geeigneter Regelalgorithmus zum zeitlich kontinuierlichen Verfolgen der Resonanzfrequenz realisiert. Vorzugsweise wird hierzu eine Regelung der Phase zwischen der mit der Schwingungserregungseinrichtung erzeugten Schwingung und der mit dem Schwingungsmessaufnehmer rückgemessenen Schwingung genutzt. Alternativ kann durch eine geeignete zyklisch wiederholte Schwingungsanregung des Sensorstabes die Resonanzfrequenz in kurzen Zeitabständen ermittelt werden.

Weiterhin umfasst die erfindungsgemäße Sensoreinrichtung eine Auswerteeinheit und eine Störeinfluss-Sensorvorrichtung, die eine Erfassung von Störfrequenzverschiebungen ermöglichen, das heißt um Störgrößen, die zu einer Verschiebung der Resonanzfrequenz am Sensorstab führen, zu messen bzw. deren Quereinflüsse auf die Messgröße Resonanzfrequenz zu erfassen. Erfasst werden also Änderungen, die durch andere Ursachen als einer Masseänderung am Probekörper ausgelöst werden. Bei den Ursachen kann es sich um physikalische Größen im Sensorstab handeln sowie um physikalische oder chemische Größen im Medium, das den Sensorstab umgibt.

Die am Stabsensor gemessene Resonanzfrequenz fo und die von der Störeinfluss-Sensorvorrichtung gemessen Störgrößen x_{Δf} werden in der erfindungsgemäßen Sensoreinrichtung an eine Kompensationsberechnungseinheit der Auswerteeinheit übertragen. Die Signalübertragung kann dabei entweder analog oder digital sowie kabelgebunden oder kabellos erfolgen. Aufgabe dieser Kompensationsberechnungseinheit ist es, aus der am Stabschwinger ermittelten Resonanzfrequenz und aus den erfassten Störgrößen fortlaufend eine kompensierte Resonanzfrequenz f_{comp} zu berechnen. Bei den die Störungen abbildenden Größen x_{Δf} handelt es sich im Allgemeinen um mehrere, im Spezialfall um eine einzelne Größe. Aus den einzelnen Störgrößen werden fortlaufend Anteile der Störfrequenzverschiebung berechnet. Der Zusammenhang zwischen Störgröße und zugehöriger Frequenzverschiebung ist im Allgemeinen nichtlinear; er kann im Sonderfall auch linear sein. Aus der störbehafteten Resonanzfrequenz fo und den intern berechneten Störfrequenzverschiebungen wird in der Kompensationsberechnungseinheit dann eine kompensierte Resonanzfrequenz f_{comp} berechnet. Das heißt, die kompensierte Resonanzfrequenz entspricht der Resonanzfrequenz am Sensorstab, die sich ohne Wirkung der erfassten Störungen einstellen würde.

Die kompensierte Resonanzfrequenz f_{comp} wird in der Auswerteeinheit an eine Masseberechnungseinheit übertragen. Da die Resonanzfrequenz des longitudinal schwingenden Stabes von dessen Masse abhängt, lässt sich in Umkehrung aus der kompensierten Resonanzfrequenz die Stabmasse berechnen. Für das Verfolgen der Beschichtung oder des Abtrages ist jedoch nicht der Absolutwert der Masse entscheidend sondern die Änderung der Masse Δm bezogen auf einen Anfangswert. Dieser Anfangswert ist für die Überwachung von Beschichtungsvorgängen im Allgemeinen der unbeschichtete Probekörper. Für abtragende Verfahren wird die Abtragsmasse am Probekörper vor Beginn des Abtrags als Null angenommen. Der Zusammenhang zwischen der kompensierten Resonanzfrequenz f_{comp} und der Masseänderung Δm (Massezunahme durch Beschichtung oder Masseabnahme durch Materialabtrag) ist im Allgemeinen nichtlinear. Er kann auf Basis theoretischer Herleitung oder experimentell ermittelt werden. Auch bei Anwendung eines theoretisch basierten Zusammenhangs sind für die konkrete Realisierung der Messung in der Regel Parameter experimentell zu ermitteln, das heißt, es ist eine Kalibrierung durchzuführen.

Aus dem zeitlichen Verlauf der Masse Δm wird in der Auswerteeinheit die Geschwindigkeit der Masseänderung berechnet. Das heißt, es wird die Abscheidegeschwindigkeit oder die Abtragsgeschwindigkeit fortlaufend berechnet. Bei Messung an realen Prozessen, reicht für die Geschwindigkeitsberechnung keine einfache Differenziation des Masseverlaufs, da hierbei hochfrequente Störungen zu stark verstärkt würden. Um einen nutzbaren Verlauf der Geschwindigkeit zu erhalten, ist daher eine geeignete dynamische Filterung mittels zum Beispiel einer Einheit zur Informationsverarbeitung nötig. Die Geschwindigkeit liegt im Ergebnis als Masseänderung pro Zeiteinheit vor.

Da die Fläche, auf der am Probekörper abgeschieden oder abgetragen wird, bekannt ist, kann bei weiterhin bekannter Dichte des abgeschiedenen oder abgetragenen Materials aus der Massedifferenz die zugehörige Differenz der Schichtdicke errechnet werden. Entsprechend lässt sich aus der Masseänderungsgeschwindigkeit eine Abscheide- oder Abtragsgeschwindigkeit vt ableiten. Diese Geschwindigkeit vt wird als Dickenänderung pro Zeit zum Beispiel in Mikrometer pro Stunde oder Mikrometer pro Minute angegeben.

Die Erfassung von Störfrequenzverschiebungen bezieht sich erfindungsgemäß insbesondere auf die Querempfindlichkeit bezüglich der Temperatur sowie den Einfluss von Gasblasen, die sich in der den Sensorstab umgebenden Prozesslösung befinden. Daher wird sowohl die Prozesstemperatur T gemessen als auch die Intensität der störend wirkenden Gasblasen erfasst. Die gemessenen Störgrößen Temperatur und Gasblasenintensität werden an die Kompensationsberechnungseinheit übertragen, die aus der mit dem Oberflächenbehandlungs-Sensor ermittelten Resonanzfrequenz und aus den fortlaufend erfassten Störgrößen die kompensierte Resonanzfrequenz f_{comp} berechnet. Die Zusammenhänge zwischen den Störgrößen Temperatur und Gasblasen sind im Allgemeinen nichtlinear, teils kann mit linearen Funktionen gearbeitet werden. Die entsprechenden Zusammenhänge müssen in der Regel durch geeignete Vorversuche ermittelt werden.

Es kann vorgesehen sein, die Messung der Störgröße Temperatur einerseits mittels der Störeinfluss-Sensorvorrichtung durchzuführen. Die Messung der Temperatur ist aber auch direkt im Oberflächenbehandlungs-Sensor möglich. Bei der entsprechenden Gestaltung verbleibt in der Störeinfluss-Sensorvorrichtung die Erfassung der Gasblasenintensität. Bei der Temperaturmessung im Oberflächenbehandlungs-Sensor kann es vorteilhaft sein, mehrere Temperaturen an verschiedenen Positionen im Sensor zu messen.

Die Erfassung der Störgröße Gasblasen kann über eine Quantifizierung der im flüssigen Medium enthaltenen Gasblasen erfolgen. Gasblasen bilden sich in vielen Messgrößen ab, die Stoffeigenschaften des flüssigen Mediums erfassen. Eine vorteilhafte Gestaltung der Erfassung der Gasblasenintensität in der Störeinfluss-Sensorvorrichtung kann die Nutzung einer fotometrischen Messeinrichtung sein. Gasblasen wirken dabei einerseits auf die Absorption von Licht, welches das flüssige Medium durchdringt. Andererseits bewirkt es eine Streuung des die Flüssigkeit durchdringenden Lichtes. Für beide Effekte sind industrietaugliche Onlinesensoren bekannt, die entsprechend zur Messung der Gasblasenintensität (Gasblasenkonzentration) eingesetzt werden können.

Gemäß einer Ausführungsform kann ein Absorptionsfotometer zur Erfassung der Gasblasenstörungen eingesetzt werden. Hierbei ist zu beachten, dass in der den Sensor umgebenden Prozesslösung Stoffe enthalten sein können, die ebenfalls eine Lichtabsorption bewirken. So führen verschiedene Metallionen zu einer Absorption von Licht im sichtbaren Bereich (zum Beispiel Nickel, Kupfer, Chrom). Erfolgt die Messung der Gasblasenintensität bei einer Wellenlänge, bei der ein gelöstes Metall ebenfalls zur Lichtabsorption führt, kann das bei Änderung der Metallionenkonzentration die entsprechende Messung stören. Dieser Effekt lässt sich durch eine vorteilhafte Gestaltung umgehen, indem die spektralen Eigenschaften der Lichtabsorption von Metallionen genutzt werden, nämlich dass Metallionen nur in bestimmten Wellenlängenbereichen eine Lichtabsorption bewirken. Gasblasen führen hingegen zu einer breitbandigen Lichtabsorption. Diese unterschiedliche Charakteristik kann vorteilhaft genutzt werden, indem ein Mehrwellenfotometer eingesetzt wird, das einerseits bei einer Wellenlänge misst, bei der die störenden Metallionen Licht absorbieren, und andererseits bei einer Wellenlänge arbeitet, bei der die störenden Metallionen kein Licht absorbieren. Da die Lichtabsorption durch Gasblasen auf beide Wellenlängen wirkt, kann auf Basis der Absorptionsmessung beider Wellenlängen, eine von den Metallionen unabhängige Absorption durch die Gasblasen berechnet werden.

Die erfindungsgemäße Vorrichtung zur störkompensierten Erfassung der Masse und der Geschwindigkeit bei der Beschichtung oder beim Abtragen von Oberflächen kann in der beschriebenen Weise als Messsystem aufgebaut werden, das neben dem Sensor zur Messung der Masseänderung Komponenten zur Messung der Temperatur und zur Erfassung von Gasblasen enthält. Die Vorrichtung kann jedoch auch vorteilhaft ausgestaltet werden, wenn für die Erfassung der Temperatur und/oder der Gasblasenintensität auf externe Komponenten zurückgegriffen wird, die bereits in der Anlage zur Oberflächenbehandlung existieren. So wird geeignete Temperaturmesstechnik häufig instrumentiert sein. Auch fotometrische Einrichtungen zur Onlinemessung der Metallkonzentration sind teils vorhanden. Handelt es sich dabei um eine Zweikanalmessung zur störkompensierten Metallkonzentrationsmessung, kann der zweite Kanal, der nicht auf die Metallionen anspricht, in der oben beschriebenen Weise zur Quantifizierung der Gasblasen genutzt werden. Der Vorteil bei einer entsprechenden Nutzung vorhandener Messtechnik ist der verringerte Hardwareaufwand für die Realisierung des erfindungsgemäßen Verfahrens.

Gemäß einer alternativen Ausgestaltung der erfindungsgemäßen Sensoreinrichtung zur störkompensierten Erfassung der Masse und der Geschwindigkeit bei der Beschichtung oder beim Abtragen von Oberflächen ist die Realisierung eines Doppelsensors. Hierbei wird der Hauptsensor als Oberflächenbehandlungs-Sensor in der oben beschriebenen Art realisiert. Daneben wird ein Referenzsensor angeordnet, der baugleich zum Hauptsensor ausgeführt ist. Das heißt, das zentrale Element des Referenzsensors ist ebenfalls ein Sensorstab, an dessen erstem Endbereich, das heißt der Sensorspitze, ein Probekörper befestigt ist. Am zweiten Endbereich, das heißt dem Sensorkopf, des Referenzsensors wird in Analogie zum Hauptsensor wiederum eine longitudinale Schwingung durch ein entsprechendes Element zur Schwingungsanregung erzeugt. Auch beim Referenzsensor ist der Sensorstab gegenüber einer Reaktion in der umgebenden Prozesslösung inert, das heißt, es findet keine Abscheidung statt bzw. es erfolgt durch die Prozesslösung kein Materialabtrag. Vorzugsweise wird dies mittels einer geeigneten Schutzschicht erreicht. Der Referenzsensor übernimmt nun die Funktion der Störeinfluss-Sensorvorrichtung.

Dieses wird dadurch erreicht, dass am Probekörper des Referenzsensors keine Abscheidung bzw. kein Abtrag stattfindet. Am Probekörper des Hauptsensors wird hingegen parallel zum Werkstück eine Schicht abgeschieden bzw. abgetragen. Somit werden Änderungen der Resonanzfrequenz am Hauptsensor sowohl durch Masseänderungen am Probekörper als auch durch Störungen verursacht. Am Referenzsensor gibt es keine Masseänderungen; Störungen bewirken dort jedoch ebenfalls Verschiebungen der Resonanzfrequenz. Vorzugsweise ist der Referenzsensor in unmittelbarer Nähe zum Hauptsensor angeordnet. Somit wirken Störungen im Allgemeinen auf beide Sensoren. Bewirkt nun eine Störung eine Verschiebung Δf der Resonanzfrequenz am Referenzsensor, kann diese als Störfrequenzverschiebung identifiziert werden. In der Kompensationsberechnungseinheit wird die mit dem Hauptsensor gemessene Resonanzfrequenz fo dann um die entsprechende Störfrequenzverschiebung Δf korrigiert.

Die gleichartige Wirkung von Resonanzfrequenz-Störungen an Haupt- und Referenzsensor wird einerseits durch die unmittelbare Nähe der beiden Sensorstäbe zueinander erreicht - wofür beide Sensorstäbe auch in einem gemeinsamen Gehäuse verbaut sein können. Andererseits wird die Gleichartigkeit der Störungswirkung durch eine einheitliche Gestaltung der Sensoren erreicht. Somit ist es vorteilhaft, gleichartige Probekörper am Hauptsensor und am Referenzsensor zu verwenden. Dadurch ist ein Wechsel des Probekörpers auch am Referenzsensor möglich, wenn es doch einmal zu Veränderungen an der Oberfläche im Probekörperbereich des Referenzsensors kommt. Alternativ ist es auch möglich, die Sensorspitze des Referenz-Sensorstabes in Form des Probekörpers zu verlängern, das heißt, der Probekörperbereich ist untrennbar mit dem Sensorstab verbunden.

Vorteilhaft an der Ausgestaltung als Doppelsensor ist eine umfassende Kompensation verschiedenster Störungen. So können - wie bei den oben beschriebenen Anordnungen - Störungen durch Temperaturänderungen sowie durch im flüssigen Medium enthaltene Gasblasen kompensiert werden. Darüber hinaus werden aber auch weitere Störungen wie zum Beispiel Füllstandsschwankungen oder Reflektionen von Schwingungen kompensiert.

Um den beschriebenen Doppelsensor zur Störkompensation nutzen zu können, muss sichergestellt werden, dass es am Probekörper des Referenzsensors nicht zu einer Beschichtung oder zu einem Materialabtrag kommt. Diese Anforderung kann je nach Art des Oberflächenbehandlungsprozesses unterschiedlich erfüllt werden. Erfolgt eine Abscheidung einer Metallschicht auf dem Probekörper des Hauptsensors durch einen galvanischen Strom, kann die Metallabscheidung am Probekörper des Referenzsensors verhindert werden, indem ein Elektrolysestrom durch den Probekörper unterbunden bzw. verhindert wird. Ohne Elektrolysestrom kommt es in entsprechenden galvanischen Prozessen auch nicht zur Metallabscheidung.

Findet am Probekörper des Hauptsensors eine außenstromlose Beschichtung statt, kann es am Probekörper des Referenzsensors auch ohne Elektrolysestrom zu einer Abscheidung kommen. Somit kann eine passive, das heißt inerte, Oberfläche am Probekörper des Referenzsensors vorgesehen sein. In Abhängigkeit des außenstromlosen Prozesses können unterschiedliche Passivierungen eingesetzt werden. Kommen Probekörper aus Edelstahl zum Einsatz, hat die Oberfläche in der Regel bereits eine gewisse Passivität. Diese kann durch Tauchen in eine Passivierungslösung (zum Beispiel Salpetersäure) noch gesteigert werden. Weiterhin ist es möglich, andere passive Materialien für den Probekörper zu verwenden. So hat insbesondere Titan in hohem Maße passive Oberflächen, auf denen eine außenstromlose Beschichtung kaum stattfindet.

Eine weitere vorteilhafte Möglichkeit eine außenstromlose Beschichtung am Probekörper des Referenzsensors zu verhindern ist der Einsatz eines so genannten Schutzpotentials. Hierbei wird die vor der außenstromlosen Beschichtung zu schützende Oberfläche auf ein positives Potential gegenüber einer im Elektrolyt befindlichen Hilfselektrode gelegt. Das entsprechende Schutzpotential verhindert auf der Oberfläche die außenstromlose Abscheidung. Die Anwendung des Schutzpotentials zur Verhinderung der Abscheidung am Referenzsensor ist besonders dann von Vorteil, wenn in der entsprechenden Anlage zur außenstromlosen Beschichtung bereits Schutzpotential verwendet wird, um Anlagenteile zu schützen. In diesem Fall ist kein zusätzlicher gerätetechnischer Aufwand zur Verhinderung der Abscheidung am Referenzsensor erforderlich.

Wird der beschriebene Doppelsensor an abtragenden Prozessen eingesetzt, muss gewährleistet sein, dass zwar am Probekörper des Hauptsensors Material bzw. eine auf dem Probekörper befindliche Schicht nasschemisch abgetragen wird, es am Probekörper des Referenzsensors jedoch nicht zu einem Abtrag von Material kommt. Das kann durch unterschiedliche Materialeigenschaften der am Hauptsensor und am Referenzsensor verwendeten Probekörper erreicht werden. Der Probekörper des Hauptsensors besteht im Normalfall aus einem Material, das dem des Werkstückes ähnlich ist, um dessen Abtragsverhalten nachzubilden. Der Probekörper des Referenzsensors wird hingegen aus einem Material gefertigt oder mit einem Material überzogen, das von der verwendeten Ätz- oder Beizlösung nicht angegriffen wird. Beispielweise kann dafür ein hochlegierter Stahl verwendet werden, der sich in der verwendeten Prozesslösung nicht oder nur sehr langsam auflöst. Um das gesamte Schwingungsverhalten möglichst wenig zu beeinflussen, sollte dabei aber ein Material für den Probekörper des Referenzsensors verwendet werden, das ähnliche schwingungstechnische Eigenschaften wie das Material des Probekörpers des Hauptsensors aufweist.

Indem sowohl der Sensorstab des Hauptsensors als auch der Sensorstab des Referenzsensors als Stabschwinger eine longitudinale Schwingung ausführen kann, ist vorzugsweise ein runder Stab-Querschnitt vorgesehen, da dieser besonders günstig zu fertigen ist. Möglich ist aber auch ein eckiger (zum Beispiel ein quadratischer) Querschnitt. Auch eine Realisierung als starres Band ist möglich. Für ein optimales Schwingungsverhalten sollte die Länge des Stabes deutlich größer als der Stabdurchmesser sein. Der Sensorstab wird vorzugsweise als Vollstab ausgeführt. Es besteht aber auch die Möglichkeit, den Sensorstab innen hohl auszuführen. Weitere Gestaltungsmöglichkeiten bestehen bezüglich des Querschnittverlaufs in axialer Richtung. Vorzugsweise wird der Sensorstab über die gesamte Länge mit konstantem Querschnitt ausgeführt. Abweichungen davon können im Bereich des Sensorkopfes auftreten, an welchen die Schwingungserregungseinrichtung und der Schwingungsmessaufnehmer angekoppelt sind. Es kann auch vorgesehen sein, den Querschnitt des Sensorstabs zu verjüngen, wobei sich der Querschnitt in axialer Richtung vom Sensorkopf zur Sensorspitze verringert.

Verfahrensgemäß wird bei der Beschichtung oder beim Abtragen von metallischen Schichten fortlaufend die Resonanzfrequenz des bzw. der Sensorstäbe ermittelt. Vorzugsweise wird die Resonanzfrequenz kontinuierlich durch eine Phasenregelung realisiert. Dabei wird die Phase zwischen der Schwingungsanregung und dem rückgemessenen Schwingungssignal auf einen geeigneten Wert geregelt. Als Stellgröße dieser Regelung dient die Anregungsfrequenz. Bei Erreichen des Regelungsziels wird der Stabschwinger in seiner Resonanzfrequenz angeregt. Alternativ zur kontinuierlichen Phasenregelung kann aber auch das wiederholte Durchfahren eines geeigneten Frequenzbereiches zur Ermittlung der Resonanzfrequenz dienen. Hierbei wird die mit dem Schwingungsmessaufnehmer erfasste Amplitude oder die Phase (gegenüber dem Anregungssignal) ausgewertet und daraus die Resonanzfrequenz ermittelt. Eine weitere Möglichkeit zur Ermittlung der Resonanzfrequenz ist die Anregung des Sensorstabes mit einem Impulssignal. Es erfolgt in diesem Fall eine Messung des rücklaufenden Impulses oder der sich ergebenden Impulsfolge. Die Rückmessung kann hierbei mit dem Schwingungsmessaufnehmer erfolgen. Möglich ist aber auch zur Rückmessung des Impulses die Schwingungserregungseinrichtung selbst zu nutzen, da bei dieser Variante der Schwingungsmessaufnehmer eingespart werden kann. Die Rückmessung liefert dann die Laufzeit des rücklaufenden Impulses, die Frequenz der sich ergebenden Impulsfolge oder die Phasenverschiebung, um daraus die Resonanzfrequenz zu berechnen.

Eine vorteilhafte Verwendung der Erfindung besteht darin, aus der vorliegenden Messung der Störgrößen auf die Warenbelegung zu schließen. Beispielsweise kommt es beim Eintauchen eines Werkstückes oft zu einer starken Gasblasenbildung durch die chemischen Reaktionen an der Werkstückoberfläche. So weisen die Störgrößenverläufe beim Eintauchen und beim Herausfahren des Werkstückes typische Muster auf, die sich auch automatisch erkennen lassen. Darauf basierend kann die Warenbelegung im Oberflächenbehandlungsprozess in Ergänzung zu den bekannten Verfahren erkannt werden. Hiermit ergibt sich die Möglichkeit einer analgenunabhängigen Erfassung und Dokumentation der Warenbelegung nicht nur für per Hand gesteuerte Anlagen sondern auch in vollautomatischen Anlagen.

Die Erfindung wird nachfolgend anhand von Ausführungsbeispielen mit Bezug auf die beiliegenden Figuren veranschaulicht, wobei gleiche oder ähnliche Merkmale mit gleichen Bezugszeichen versehen sind. Dazu zeigen in schematischer Darstellung die
- Fig. 1:: eine Schnittdarstellung eines Oberflächenbehandlungs-Sensors gemäß einer Ausführungsform;
- Fig. 2:: eine Sensoreinrichtung mit Doppelsensor gemäß einer ersten Ausführungsform;
- Fig. 3:: eine Sensoreinrichtung mit Doppelsensor gemäß einer zweiten Ausführungsform;
- Fig. 4:: eine Sensoreinrichtung mit Doppelsensor gemäß einer dritten Ausführungsform;
- Fig. 5:: eine Sensoreinrichtung mit Doppelsensor gemäß einer vierten Ausführungsform;
- Fig. 6:: eine Schnittdarstellung eines Oberflächenbehandlungs-Sensors gemäß einer weiteren Ausführungsform;
- Fig. 7:: eine Sensoreinrichtung mit Doppelsensor gemäß einer fünften Ausführungsform; und
- Fig. 8:: ein Diagramm der Zeitabhängigkeit von Temperatur und Resonanzfrequenz bei einer Oberflächenbehandlung.

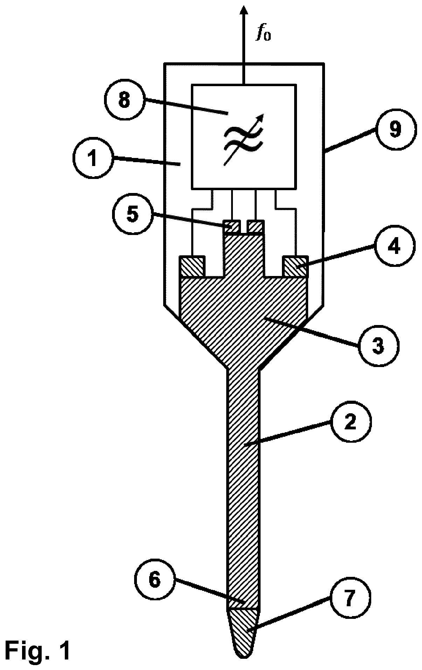

Fig. 1 veranschaulicht in einer Schnittdarstellung einen stabförmigen Oberflächenbehandlungs-Sensor 1 gemäß einer Ausführungsform. Der Sensor 1 wird am Rand einer Beschichtungswanne (nicht dargestellt) für die Chrombeschichtung befestigt und der an der Sensorspitze 6 angeordnete kegelförmige Probekörper 7 wird über den aus dem Sensorgehäuse 9 herausgeführten, zylindrischen Sensorstab 2 elektrisch mit einer zum Onlinemessgerät gehörenden separaten Elektrolysestromquelle (nicht dargestellt) verbunden.

Am Probekörper 7 wird nun ein Elektrolysestrom eingestellt, der eine gleichmäßige Stromdichte realisiert, die der mittleren Stromdichte an den zu beschichtenden Werkstücken (nicht dargestellt) entspricht. Dadurch kommt es am Probekörper 7 zu einer Chromabscheidung, die der parallelen Abscheidung auf den Werkstücken entspricht. Durch die Chromabscheidung steigt die Masse des Probekörpers 7, wodurch die Resonanzfrequenz des Sensorstabes 2 verringert wird. Die Steuer- und Regeleinrichtung 8 realisiert eine dauerhafte Schwingung des Sensorstabes 2 in seiner Resonanzfrequenz. Als Schwingungserregungseinrichtung 4 und Schwingungsmessaufnehmer 5 zur Schwingungsrückmessung dienen dabei am Sensorkopf 3 angebrachte piezoelektrische Dickenschwinger. Um die fortlaufende Resonanzschwingung zu gewährleisten, wird die Phase zwischen Anregungssignal und rückgemessenen Signal durch die Steuer- und Regeleinrichtung 8 auf einen konstanten Wert geregelt. Die sich verändernde Resonanzfrequenz bildet die veränderliche Masse am Probekörper 7 des Sensors 1 ab. Somit kann aus der gemessenen Resonanzfrequenz die Masse online berechnet werden. Da die Fläche am Probekörper 1 sowie die Dichte des abgeschiedenen Chroms (7,14 g/cm³) bekannt sind, kann aus der veränderlichen Masse auch eine Schichtdicke berechnet werden. Hierbei bezieht sich die Schichtdicke auf den Anfangswert Null für den unbeschichteten Stahlprobekörper 7. Weiterhin wird eine Abscheidegeschwindigkeit online berechnet. Diese kann als Dickenänderung pro Zeiteinheit in µm/h oder µm/min dargestellt werden. Zusätzlich ist eine Berechnung der Masseänderung pro Zeiteinheit in g/h möglich. Da der Elektrolysestrom zur Abscheidung am Probekörper 7 bekannt ist, kann mit dieser zweiten Abscheidegeschwindigkeit weiterhin die Stromausbeute der Chromabscheidung fortlaufend berechnet werden.

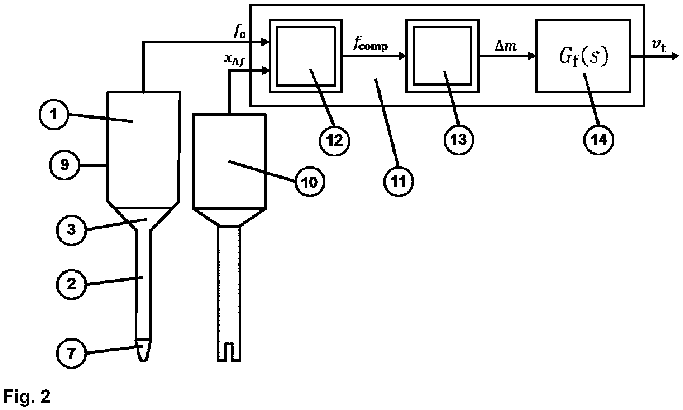

Die Sensoreinrichtung gemäß Fig. 2 wird in einer Anlage zum Abtrag von Aluminium eingesetzt. Die Sensoreinrichtung umfasst neben dem Oberflächenbehandlungs-Sensor 1, dessen Sensorstab 2 am Sensorkopf aus dem Gehäuse 9 herausgeführt ist, mit dem auswechselbaren, kegelförmigen Probekörper 7 aus Aluminium noch die Störeinfluss-Sensorvorrichtung 10. Am Probekörper 7 kommt es in Analogie zum Werkstück (nicht dargestellt) zu einem Aluminiumabtrag. Dadurch wird die Masse des Sensorstabs 2 verringert. Die Masseverringerung führt zu einer Erhöhung der Resonanzfrequenz des longitudinal schwingenden Sensorstabs 2. Die am Sensorstab 2 gemessene Resonanzfrequenz fo und die mittels der Störeinfluss-Sensorvorrichtung 10 erfassten Störgrößen x_{Δf} werden an die Auswerteeinheit 11 übertragen. Dort wird durch die Kompensationsberechnungseinheit 12 die kompensierte Resonanzfrequenz f_{comp} berechnet und diese wird an die Masseberechnungseinheit 13 übertragen. Aus dem zeitlichen Verlauf der Masse Δm wird in der Geschwindigkeitsberechnungseinheit 14 die Geschwindigkeit der Masseänderung berechnet. Das heißt, es wird die Abscheidegeschwindigkeit oder die Abtragsgeschwindigkeit fortlaufend berechnet.

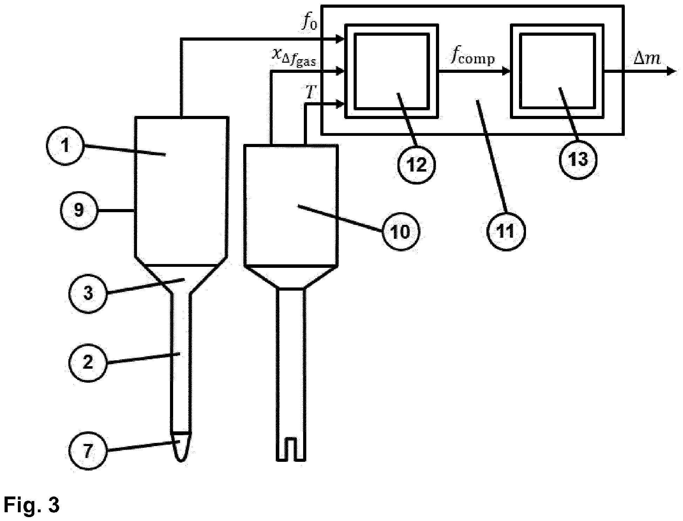

Bei der Ausführung gemäß Fig. 3 wird von der Störeinfluss-Sensorvorrichtung 10 erstens die Prozesstemperatur T gemessen und zweitens die Intensität der störend wirkenden Gasblasen x_{Δf gas} erfasst. Die gemessenen Störgrößen Temperatur T und Gasblasenintensität x_{Δf gas} werden an die Kompensationsberechnungseinheit 12 übertragen. Dort wird aus der mit dem Sensor 1 ermittelten Resonanzfrequenz f₀ und aus den fortlaufend erfassten Störgrößen die kompensierte Resonanzfrequenz f_{comp} berechnet. Die Zusammenhänge zwischen den Störgrößen Temperatur und Gasblasen sind im Allgemeinen nichtlinear, teils kann mit linearen Funktionen gearbeitet werden. Die entsprechenden Zusammenhänge müssen somit durch geeignete Vorversuche ermittelt werden.

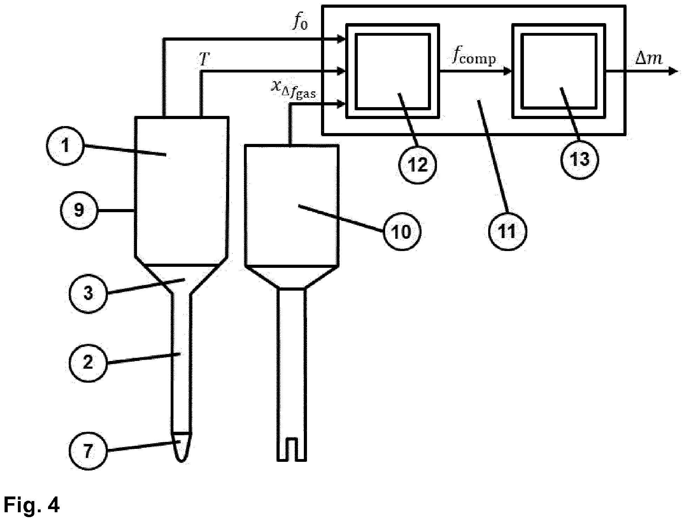

Fig. 4 zeigt eine Sensoreinrichtung mit Oberflächenbehandlungs-Sensor 1 und Störeinfluss-Sensorvorrichtung 10 analog zu Fig. 3, wobei gemäß Fig. 4 die Störeinfluss-Sensorvorrichtung 10 ein Absorptionsfotometer zur Messung der Gasblasenkonzentration x_{Δf gas} ist. Zur Erfassung der Temperatur T ist ein Temperatursensor (nicht dargestellt) im Sensorstab 2 des Oberflächenbehandlungs-Sensors 1 platziert. Das Messsignal der Temperatur T und der Gasblasenkonzentration x_{Δf gas} wird an die Kompensationsberechnungseinheit 12 geleitet.

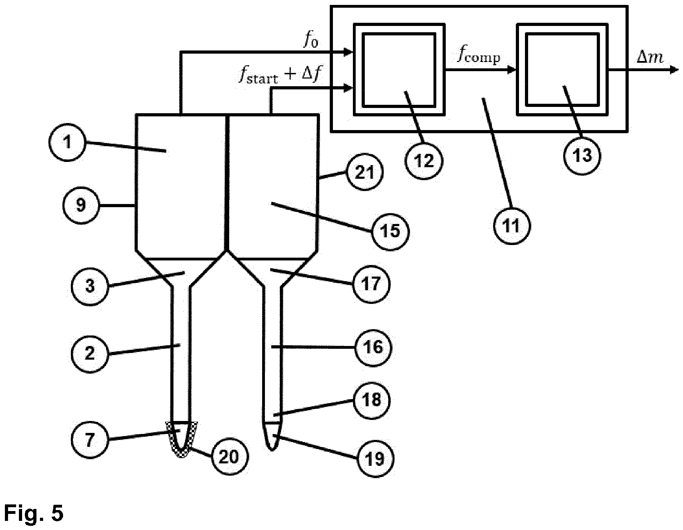

Die als Doppelsensor ausgeführte Sensoreinrichtung gemäß Fig. 5 wird in einer Anlage zur außenstromlosen Nickelbeschichtung eingesetzt, um die sich verändernde Schichtdicke und die Abscheidegeschwindigkeit während der industriellen Fertigung zu überwachen. Dabei erfolgt am Probekörper 7 des Hauptsensors 1 die Abscheidung einer Nickel-Phosphorschicht 20. Der longitudinal schwingende Rundstab 2 wird fortlaufend in seiner Resonanzfrequenz angeregt. Parallel zum Hauptsensor 1 ist ein baugleicher Referenzsensor 15 angeordnet. Auch hier wird durch eine Phasenregelung eine longitudinale Resonanzschwingung kontinuierlich realisiert. Der Doppelsensor ist so ausgeführt, dass das Sensorgehäuse 9 des Hauptsensors 1 und das Sensorgehäuse 21 des Referenzsensors 15 eine bauliche Einheit bilden.

Die Onlinemessung von Schichtdicke und Abscheidegeschwindigkeit wird im Chemisch-Nickel-Prozess in zweifacher Weise gestört. Erstens kommt es zu relativ schnellen Änderungen der Temperatur beim Eintauchen des zu beschichtenden Werkstückes sowie beim Nachdosieren von Prozesschemikalien und Wasser. Zweitens gibt es erhebliche Gasblasenbildung durch die Wasserstoffentwicklung bei der Beschichtung des Werkstückes. Die Menge der Gasblasen in der Prozesslösung schwankt deutlich bei der Behandlung unterschiedlicher Werkstücke sowie zwischen den Phasen der Werkstückbeschichtung und den Phasen ohne Badbelegung.

Um beide Störeffekte zu erfassen, muss nun eine Abscheidung am Probekörper 19 des Referenzsensors 15 verhindert werden. Dazu wird der Sensorstab 16 des Referenzsensors 15 mit dem Schutzpotential des Wannenschutzes elektrisch verbunden. Somit liegt dieses Potential auch am Probekörper 19 des Referenzsensors 15 an und verhindert dort eine Abscheidung. Der Sensorstab 2 des Hauptsensors 1 wird hingegen nicht mit dem Schutzpotential verbunden, sodass es an dessen Probekörper 7 zur Beschichtung kommt. Änderungen der Resonanzfrequenz werden entsprechen am Hauptsensor 1 durch die Massezunahme am Probekörper 7 verursacht. Weiterhin kommt es zu Verschiebungen der Resonanzfrequenz durch die beschriebenen Temperaturschwankungen und durch die schwankende Gasblasenkonzentration in der Prozesslösung. Am Referenzsensor 15 fehlt die Masseänderung. Die Störungen durch Temperatur und Gasblasen wirken dort jedoch in gleicher Weise, da sich der Referenzsensor 15 in unmittelbarer Nähe zum Hauptsensor 1 befindet. Änderungen der Resonanzfrequenz Δf des Referenzsensors (Störfrequenzverschiebung) werden zur Kompensationsberechnungseinheit 12 übertragen; dort wird die mit dem Haupt sensor 1 gemessene Resonanzfrequenz f₀ um die Störfrequenzverschiebung Δf korrigiert. Aus der entsprechend kompensierten Resonanzfrequenz f_{comp} wird in der Masseberechnungseinheit 13 die Masse Δm der am Hauptsensor 1 abgeschiedenen Nickel-Phosphor-Schicht 20 kontinuierlich berechnet. Daraus kann wiederum der Verlauf der Schichtdicke berechnet werden, und darauf basierend erfolgt eine fortlaufende Ableitung der Abscheidegeschwindigkeit.

In der beschriebenen Beispielanwendung findet eine wechselnde Warenbelegung statt. Es werden Teile mit unterschiedlich dicken Chemisch-Nickel-Schichten beschichtet. Die zu beschichtende Gesamtoberfläche einer Werkstückbehandlung schwankt infolge des Bauteilspektrums stark. Zwischen der Beschichtung der Teile kommt es zudem zu variierenden Badbelegungspausen. Da die Beschichtung starke Gasblasenbildung erzeugt und sich die Prozesslösung beim Eintauchen der Werkstücke zeitweilig abkühlt, tritt eine Erhöhung der Resonanzfrequenz der Stabschwinger auf. Nach Herausfahren der Werkstücke kommt es zum Ausgasen; die Frequenz sinkt dadurch wieder. Die entsprechende Störfrequenzverschiebung wird mit dem Referenzsensor 15 erfasst. Ergänzend zur Störkompensation kann diese Information zur Erkennung der Warenbelegung genutzt werden. Dazu werden durch Analyse von Betriebsdaten typische Muster identifiziert, die beim Eintauchen und beim Herausfahren der Werkstücke entstehen. Während der Messung werden diese Muster dann mit geeigneten Algorithmen erkannt und es ist somit möglich, das Eintauchen und Herausfahren der Werkstücke automatisch zu erfassen. Somit besteht eine von der Anlagensteuerung unabhängige Erfassung der Warenbelegung.

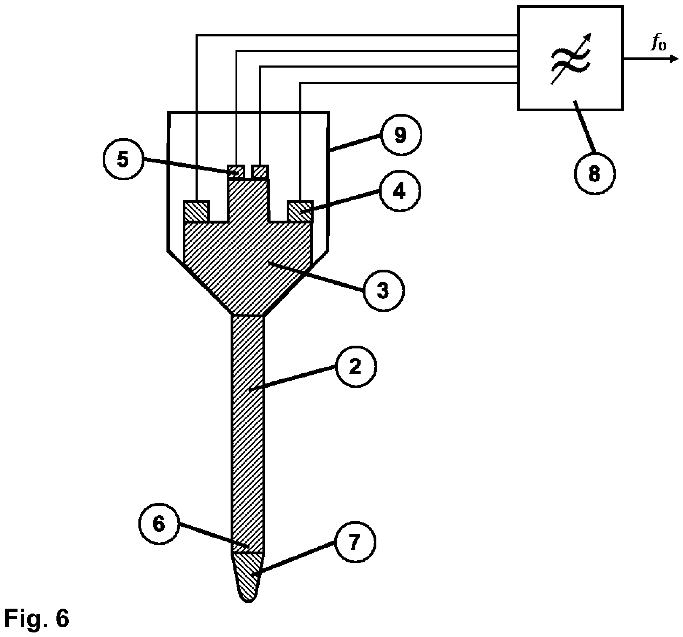

In der Fig. 6 ist eine Messeinrichtung veranschaulicht, bei welcher die Steuer- und Regeleinrichtung 8 außerhalb des Sensorgehäuses 9 angeordnet ist. Somit kann die Steuer- und Regeleinrichtung 8 vom Sensorstab 2 örtlich getrennt aufgestellt werden.

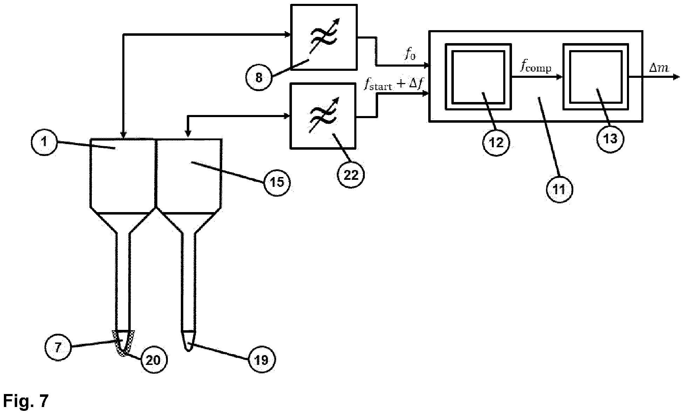

Zur Online-Überwachung der Abscheidegeschwindigkeit in einer Anlage für das außenstromlose Verkupfern von Teilen für Elektronikanwendungen kommt ein Doppelsensor wie in Fig. 7 dargestellt zum Einsatz. Parallel zu diesen Teilen wird am Probekörper 7 des Hauptsensors 1 eine Kupferschicht 20 chemisch reduktiv abgeschieden. Als Schwingungselement dient ein flacher Stab, der zu longitudinalen Schwingungen angeregt wird. Da in der Prozesswanne (nicht dargestellt) zur chemischen Verkupferung neben den zu beschichtenden Teilen wenig Platz ist, muss der Sensor 1 zur Erfassung der Abscheidegeschwindigkeit möglichst klein gestaltet sein. Deshalb ist die Steuer- und Regeleinrichtung 8 nicht im Sensorgehäuse platziert, sondern räumlich getrennt außerhalb der Prozesswanne angeordnet. Von dort wird die Phase zwischen Anregungssignal und rückgemessenem Signal geregelt, sodass die Resonanzschwingung fortlaufend gewährleistet ist. In unmittelbarer Nähe zum Hauptsensor 1 befindet sich ein baugleicher Referenzsensor 15. Auch für diesen Referenzsensor 15 ist die Steuer- und Regeleinrichtung 22 getrennt vom Sensor 15 außerhalb der Prozesswanne (nicht dargestellt) angeordnet; wiederum wird mittels einer Phasenregelung eine fortlaufende Resonanzschwingung realisiert.

Die Störeffekte werden durch den Referenzsensor 15 erfasst. Um die Abscheidung am Probekörper 19 des Referenzsensors 15 zu verhindern, wird ein Probekörper 19 aus Edelstahl verwendet, der durch geeignete chemische Vorbehandlung zusätzlich passiviert ist. Der Probekörper 7 am Hauptsensor 1 hingegen besteht aus Edelstahl, der mit einer dünnen Kupferschicht vorverkupfert ist. Beim Eintauchen in den Chemisch-Kupfer-Elektrolyten kommt es dort zur autokatalytischen Abscheidung einer Kupferschicht 20. Die dadurch bewirkte Massezunahme führt zu einer Änderung der Resonanzfrequenz am Hauptsensor 1. Die Temperaturschwankungen und die schwankende Gasblasenkonzentration bewirken eine zusätzlich Verschiebungen der Resonanzfrequenz. Dagegen gibt es am Referenzsensor 15 keine Masseänderung; die Störungen durch Temperatur und Gasblasen wirken auch dort. Die beiden in diesem Anwendungsbeispiel außerhalb der Stabsensoren angeordneten Steuer- und Regeleinrichtung 8 bzw. 22 zur Realisierung der Resonanzfrequenz liefern folglich einerseits das masseabhängige und gestörte Frequenzsignal f₀ des Hauptsensors 1 und andererseits die am Referenzsensor 15 gemessene Störfrequenzverschiebung Δf. In der Kompensationsberechnungseinheit 12 wird aus beiden Signalen die störkompensierte Resonanzfrequenz f_{comp} gebildet. In der Masseberechnungseinheit 13 findet dann die kontinuierliche Berechnung der Masse Δm der am Hauptsensor 1 abgeschiedenen Kupferschicht 20 statt. Daraus wird fortlaufend die Geschwindigkeit der Kupferabscheidung ermittelt, die weitgehend frei von Störungen durch Temperatur und Gasblasen sind.

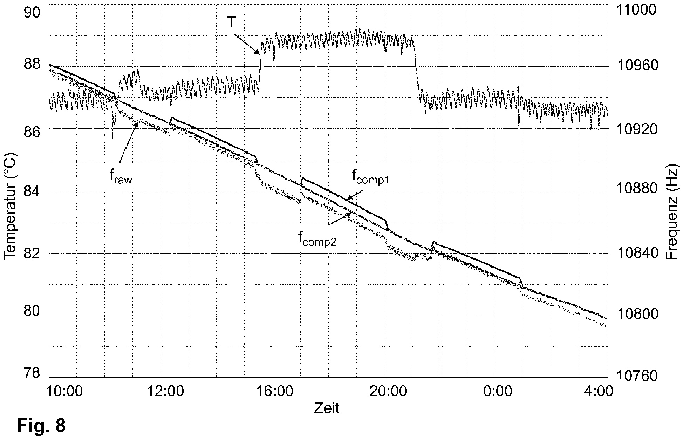

In der Fig. 8 sind der zeitliche Verlauf der Temperatur T, der unkompensierten Resonanzfrequenzen f_{raw} und der kompensierten Resonanzfrequenzen f_{comp} während einer außenstromlosen Nickelbeschichtung gezeigt. In diesem Beispiel findet eine wechselnde Warenbelegung statt. Es werden Teile mit unterschiedlich dicken Chemisch-Nickel-Schichten beschichtet. Die zu beschichtende Gesamtoberfläche einer Warenbehandlung schwankt infolge des Bauteilspektrums stark. Zwischen der Beschichtung der Teile kommt es zudem zu variierenden Badbelegungspausen. Da die Beschichtung starke Gasblasenbildung erzeugt und sich die Prozesslösung beim Eintauchen der Ware zeitweilig abkühlt, tritt eine Erhöhung der Resonanzfrequenz der Stabschwinger auf. Nach Herausfahren der Ware kommt es zum Ausgasen; die Frequenz sinkt dadurch wieder. Die entsprechende Störfrequenzverschiebung wird mit dem Referenzsensor erfasst. Ergänzend zur Störkompensation kann diese Information zur Erkennung der Warenbelegung genutzt werden. Dazu werden durch Analyse von Betriebsdaten typische Muster identifiziert, die beim Eintauchen und beim Herausfahren der Ware entstehen. Während der Messung werden diese Muster dann mit geeigneten Algorithmen erkannt und es ist somit möglich, das Eintauchen und Herausfahren der Ware automatisch zu erfassen. Somit besteht eine von der Anlagensteuerung unabhängige Erfassung der Warenbelegung. Das ist insbesondere bei Störsituationen und im Handbetrieb der Anlage nützlich.

### Liste der verwendeten Bezugszeichen

- 1: Oberflächenbehandlungs-Sensor / Hauptsensor
- 2: Sensorstab
- 3: zweiter Endbereich / Sensorkopf
- 4: Schwingungserregungseinrichtung
- 5: Schwingungsmessaufnehmer
- 6: erster Endbereich / Sensorspitze
- 7: Probekörper
- 8: Steuer- und Regeleinrichtung
- 9: Sensorgehäuse
- 10: Störeinfluss-Sensorvorrichtung
- 11: Auswerteeinheit
- 12: Kompensationsberechnungseinheit
- 13: Masseberechnungseinheit
- 14: Geschwindigkeitsberechnungseinheit
- 15: Referenzsensor
- 16: Sensorstab des Referenzsensors
- 17: Sensorkopf des Referenzsensors
- 18: Sensorspitze des Referenzsensors
- 19: Probekörper des Referenzsensors
- 20: Schicht auf dem Probekörper des Hauptsensors
- 21: Sensorgehäuse des Referenzsensors
- 22: Steuer- und Regeleinrichtung des Referenzsensors

## Patentansprüche

1. Verfahren zur störungskompensierten Bestimmung des Materialauftrags oder -abtrags während einer nasschemischen Oberflächenbehandlung eines Werkstückes in einer Prozesslösung mittels einer Sensoreinrichtung, die einen Oberflächenbehandlungs-Sensor (1) mit einem Sensorstab (2), der geregelt zu Schwingungen in einer longitudinalen Eigenschwingungsmode erregt wird, und einem mit einem in die Prozesslösung eintauchenden Endbereich (6) des Sensorstabes (2) lösbar verbundenen Probekörper (7), an dem eine Oberflächenbehandlung in gleicher Weise zu dem Werkstück durchgeführt wird, umfasst, wobei eine während der Oberflächenbehandlung auftretende Frequenzverschiebung der longitudinalen Eigenschwingungsmode des Sensorstabes (2) erfasst und aus der Frequenzverschiebung die sich während der Oberflächenbehandlung aufgrund Abscheidung oder Abtrag ändernde Masse des Probekörpers (7) bestimmt wird,
wobei mittels einer Störeinfluss-Sensorvorrichtung (10) Frequenzverschiebungen, die von zeitlichen Temperaturgradienten in der Prozesslösung als Störgröße verursacht sind, zusätzlich zu der von der Masseänderung hervorgerufenen Frequenzverschiebung erfasst werden,
**dadurch gekennzeichnet dass**,
- der Sensorstab (2) parallel zu dem zu behandelnden Werkstück in die Prozesslösung eingetaucht wird,
- mittels der Störeinfluss-Sensorvorrichtung (10) zusätzlich die Frequenzverschiebungen, die von weiteren Störgrößen, umfassend Gasblasen in der Prozesslösung, hervorgerufen werden, erfasst werden, und
- in Echtzeit die Frequenzverschiebung um den Einfluss der Störgrößen korrigiert wird, indem ein von den Störgrößen verursachter Anteil von der Frequenzverschiebung abgezogen wird, bevor aus der korrigierten Frequenzverschiebung die Änderung der Masse bestimmt wird.

2. Verfahren nach Anspruch 1, **dadurch gekennzeichnet, dass** das Auftreten von Gasblasen in der Prozesslösung optisch bestimmt wird, wobei im flüssigen Medium die Lichtabsorption oder die Streuung erfasst werden.

3. Verfahren nach Anspruch 1, **dadurch gekennzeichnet, dass** der von den Störgrößen verursachte Anteil der Frequenzverschiebung bestimmt wird, indem ein zu dem Oberflächenbehandlungs-Sensor (1) baugleicher, stabförmiger Referenzsensor (15), dessen gesamte Oberfläche gegen die nasschemische Oberflächenbehandlung in der Prozesslösung inert ist, parallel zu dem Oberflächenbehandlungs-Sensor (1) in der Prozesslösung angeordnet wird, wobei der Referenzsensor (15) eine in Form des Probekörpers (7) verlängerte Sensorspitze oder einen gegen die nasschemische Oberflächenbehandlung in der Prozesslösung inerten Probekörper aufweist, und wobei der Referenzsensor (15) zu Schwingungen der gleichen longitudinalen Eigenschwingungsmode wie der Oberflächenbehandlungs-Sensor (1) angeregt wird und die bei dem Referenzsensor (15) auftretende Frequenzverschiebung von der bei dem Oberflächenbehandlungs-Sensor (1) auftretenden Frequenzverschiebung abgezogen wird.

4. Verfahren nach Anspruch 3, **dadurch gekennzeichnet, dass** eine außenstromlose Abscheidung am Referenzsensor (15) durch das Anlegen eines Schutzpotentials verhindert, eine galvanische Abscheidung durch elektrische Isolation am Referenzsensor (15) verhindert oder ein nasschemischer Materialabtrag am Referenzsensor (15) durch die Verwendung eines Probekörpers (19) aus einem abtragsresistenten Material oder einer abtragsresistenten Beschichtung verhindert wird.

5. Verfahren nach einem der vorstehenden Ansprüche, **dadurch gekennzeichnet, dass** die am Oberflächenbehandlungs-Sensor (1) fortlaufend stattfindende Ermittlung der Resonanzfrequenz erreicht wird, indem
- die Phase zwischen der Schwingungsanregung und einem rückgemessenen Schwingungssignal kontinuierlich geregelt wird, oder
- stetig wiederholt in einem vorgegebenem Frequenzbereich schrittweise eine Mehrzahl von Schwingungsfrequenzen eingestellt und zu jeder Schwingungsfrequenz die Amplitude und/oder die Phasenverschiebung gemessen werden, oder
- der Sensorstab (2, 16) mit einem Impulssignal angeregt und die Laufzeit des rücklaufenden Impulses, die Frequenz einer sich ergebenden Impulsfolge oder die Phasenverschiebung gemessen werden.

6. Sensoreinrichtung zur störungskompensierten Bestimmung des Materialauftrags oder -abtrags während einer nasschemischen Oberflächenbehandlung eines Werkstückes in einer Prozesslösung gemäß dem Verfahren nach Anspruch 1, aufweisend:
- wenigstens einen Oberflächenbehandlungs-Sensor (1), der einen gegen eine Reaktion in der Prozesslösung inerten Sensorstab (2), welcher an seinem ersten Endbereich (6) lösbar mit einem Probekörper (7) und an seinem zweiten Endbereich (3) mit einer Schwingungserregungseinrichtung (4) und einem Schwingungsmessaufnehmer (5) verbunden ist, und eine mit der Schwingungserregungseinrichtung (4) und dem Schwingungsmessaufnehmer (5) signaltechnisch verbundene Steuer- und Regeleinrichtung (8) umfasst, wobei die Steuer- und Regeleinrichtung (8) eingerichtet ist, den Sensorstab (2) zu einer Schwingung in einer longitudinalen Eigenschwingungsmode anzuregen und eine zeitliche Frequenzverschiebung dieser Eigenschwingungsmode zu erfassen,
- eine Auswerteeinheit (11) mit einer Masseberechnungseinheit (13), und
- eine mit der Auswerteeinheit (11) signaltechnisch verbundene Störeinfluss-Sensorvorrichtung (10) zur Erfassung von die Frequenzverschiebung als Störgröße beeinflussende zeitliche Temperaturgradienten in der Prozesslösung,
**dadurch gekennzeichnet dass**
- die Auswerteeinheit (11) zusätzlich eine Kompensationsberechnungseinheit (12) beinhaltet, und
- die mit der Auswerteeinheit (11) signaltechnisch verbundene Störeinfluss-Sensorvorrichtung (10) weiterhin eingerichtet ist, die Frequenzverschiebung als weitere Störgröße beeinflussende Gasblasen in der Prozesslösung zu erfassen, wobei die Auswerteeinheit (11) derart ausgebildet ist, dass von ihr in Echtzeit eine um den Einfluss der Störgrößen korrigierte Frequenzverschiebung der longitudinalen Eigenschwingungsmode bestimmbar ist.

7. Sensoreinrichtung nach Anspruch 6, **dadurch gekennzeichnet, dass** die Störeinfluss-Sensorvorrichtung (10) einen Lichtaufnehmer zur fotometrischen Erfassung von Gasblasen in der Prozesslösung aufweist.

8. Sensoreinrichtung nach Anspruch 7, **dadurch gekennzeichnet, dass** der Lichtaufnehmer ein Absorptionsfotometer ist, welches eingerichtet ist, zur Differenzierung zwischen in der Prozesslösung gelöster Stoffe und in der Prozesslösung ausgebildeter Gasblasen die Lichtintensität bei unterschiedlichen Wellenlängen zu messen.

9. Sensoreinrichtung nach Anspruch 6, **dadurch gekennzeichnet, dass** die Störeinfluss-Sensorvorrichtung (10) ein stabförmiger Referenzsensor (15) ist, der einen zum Oberflächenbehandlungs-Sensor (1) baugleichen, gegen eine Reaktion in der Prozesslösung inerten Referenz-Sensorstab (16), welcher an seinem ersten Endbereich (18) mit einem gegen eine Reaktion in der Prozesslösung inerten Probekörper (19) und an seinem zweiten Endbereich (17) mit einer Schwingungserregungseinrichtung (4) und einem Schwingungsmessaufnehmer (5) verbunden ist, und eine mit der Schwingungserregungseinrichtung (4) und dem Schwingungsmessaufnehmer (5) signaltechnisch verbundene Steuer- und Regeleinrichtung (22) umfasst, wobei die Steuer- und Regeleinrichtung (22) eingerichtet ist, den Referenz-Sensorstab (16) mittels der Schwingungserregungseinrichtung (4) zu einer Schwingung in einer longitudinalen Eigenschwingungsmode anzuregen und mittels des Schwingungsmessaufnehmers (5) eine zeitliche Frequenzverschiebung dieser Eigenschwingungsmode zu erfassen.

10. Sensoreinrichtung nach Anspruch 9, **dadurch gekennzeichnet, dass** die Steuer- und Regeleinrichtung (8) des Oberflächenbehandlungs-Sensors (1) als ein eigenständiges, vom Oberflächenbehandlungs-Sensor (1) räumlich getrenntes Bauteil ausgebildet ist und/oder die Steuer- und Regeleinrichtung (22) des Referenzsensors (15) als ein eigenständiges, vom Referenzsensor (15) räumlich getrenntes Bauteil ausgebildet ist.

11. Verwendung der Sensoreinrichtung nach einem der Ansprüche 6 bis 10 zur Erfassung und Dokumentation einer Zeitdauer der Oberflächenbehandlung des Werkstückes.

## Claims

1. Method for the interference-compensated determination of the material application or material removal during a wet chemical surface treatment of a workpiece in a process solution by means of a sensor device, which comprises a surface treatment sensor (1) having a sensor rod (2), which is excited to vibrate in a controlled manner in a longitudinal natural vibration mode, and having a test specimen (7) detachably connected to an end region (6) of the sensor rod (2) immersed in the process solution, on which a surface treatment is carried out in the same manner as to the workpiece, wherein a frequency shift of the longitudinal natural vibration mode of the sensor rod (2), which occurs during the surface treatment, is detected and from the frequency shift the dimension of the test specimen (7), which changes during the surface treatment due to deposition or removal, is determined,
wherein by means of an interference-influence sensor device (10) frequency shifts, which are caused by temporal temperature gradients in the process solution as interference variables, are detected in addition to the frequency shift caused by the dimensional change,
**characterised in that**
- the sensor rod (2) is immersed into the process solution parallel to the workpiece to be treated,
- by means of the interference-influence sensor device (10) the frequency shifts, which are caused by further interference variables, comprising gas bubbles in the process solution, are additionally detected, and
- in real time the frequency shift is corrected for the influence of the interference variables, by subtracting one portion caused by the interference variables from the frequency shift, before the change in dimension is determined from the corrected frequency shift.

2. Method according to claim 1, **characterised in that** the occurrence of gas bubbles in the process solution is optically determined, wherein the light absorption or the scattering in the liquid medium are detected.

3. Method according to claim 1, **characterised in that** the portion of the frequency shift caused by the interference variables is determined, by a rod-shaped reference sensor (15), that is identical in construction to the surface treatment sensor (1), the entire surface of which is inert to the wet chemical surface treatment in the process solution, being arranged parallel to the surface treatment sensor (1) in the process solution, wherein the reference sensor (15) has a sensor tip extended in the form of the test specimen (7) or a test specimen inert to the wet chemical surface treatment in the process solution, and wherein the reference sensor (15) is excited to vibrations of the same longitudinal natural vibration mode as the surface treatment sensor (1) and the frequency shift that occurs in the reference sensor (15) is subtracted from the frequency shift that occurs in the surface treatment sensor (1).

4. Method according to claim 3, **characterised in that** a deposition without external current at the reference sensor (15) is prevented by the application of a protective potential, a galvanic deposition is prevented by electrical insulation on the reference sensor (15) or a wet chemical material removal is prevented on the reference sensor (15) by the use of a test specimen (19) made of a material resistant to removal or a coating resistant to removal.

5. Method according to any one of the preceding claims, **characterised in that** the determination of the resonant frequency continuously occurring at the surface treatment sensor (1) is achieved, by
- the phase between the vibration excitation and a vibration signal measured in return being continuously controlled, or
- a plurality of vibration frequencies being repeatedly set step by step in a predetermined frequency range and the amplitude and/or the phase shift being measured for each vibration frequency, or
- the sensor rod (2, 16) being excited with an impulse signal and the run time of the returning impulse, the frequency of a resulting impulse sequence or the phase shift being measured.

6. Sensor device for the interference-compensated determination of the material application or material removal during a wet chemical surface treatment of a workpiece in a process solution according to the method according to claim 1, having:
- at least one surface treatment sensor (1), which comprises a sensor rod (2) inert to a reaction in the process solution, which is detachably connected on its first end region (6) to a test specimen (7) and on its second end region (3) to a vibration excitation device (4) and a vibration measuring sensor (5), and a control- and regulation device (8) connected for signalling to the vibration excitation device (4) and the vibration measuring sensor (5), wherein the control- and regulation device (8) is configured to excite the sensor rod (2) to a vibration in a longitudinal natural vibration mode and to detect a temporal frequency shift of said natural vibration mode,
- an evaluation unit (11) with a mass calculation unit (13), and
- an interference-influence sensor device (10) connected for signalling to the evaluation unit (11) for detecting temporal temperature gradients influencing the frequency shift as an interference variable in the process solution,
**characterised in that**
- the evaluation unit (11) additionally contains a compensation calculation unit (12), and
- the interference-influence sensor device (10) connected for signally to the evaluation unit (11) is furthermore configured to detect gas bubbles in the process solution influencing the frequency shift as a further interference variable, wherein the evaluation unit (11) is designed in such a manner that a frequency shift of the longitudinal natural vibration mode corrected for the influence of the interference variables can be determined by it in real time.

7. Sensor device according to claim 6, **characterised in that** the interference-influence sensor device (10) has a light sensor for the photometric detection of gas bubbles in the process solution.

8. Sensor device according to claim 7, **characterised in that** the light sensor is an absorption photometer, which is configured to measure the light intensity at different wave lengths to differentiate between substances dissolved in the process solution and gas bubbles formed in the process solution.

9. Sensor device according to claim 6, **characterised in that** the interference-influence sensor device (10) is a rod-shaped reference sensor (15), which comprises a reference sensor rod (16) inert to a reaction in the process solution, that is identical in construction to the surface treatment sensor (1), which is connected on its first end region (18) to a test specimen (19) inert to a reaction in the process solution and is connected on its second end region (17) to a vibration excitation unit (4) and a vibration measuring sensor (5), and a control- and regulation device (22) connected for signally to the vibration excitation device (4) and the vibration measuring sensor (5), wherein the control- and regulation device (22) is configured to excite the reference sensor rod (16) by means of the vibration excitation device (4) to a vibration in a longitudinal natural vibration mode and to detect a temporal frequency shift of said natural vibration mode by means of the vibration measuring sensor (5).

10. Sensor device according to claim 9, **characterised in that** the control- and regulation device (8) of the surface treatment sensor (1) is designed as an independent component spatially separated from the surface treatment sensor (1) and/or the control- and regulation device (22) of the reference sensor (15) is designed as an independent component spatially separated from the reference sensor (15).

11. Use of the sensor device according to any one of claims 6 to 10 for the detection and documentation of a time duration of the surface treatment of the workpiece.

## Revendications

1. Procédé de détermination à compensation de perturbations de l'application ou de l'enlèvement de matière lors d'un traitement de surface chimique humide d'une pièce dans une solution de processus au moyen d'un dispositif de détection qui comprend un capteur de traitement de surface (1) avec une tige de détection (2) qui est excitée de manière contrôlée pour osciller dans un mode d'oscillation propre longitudinale, et une éprouvette (7) qui est reliée de manière amovible à une zone d'extrémité (6) de la tige de détection (2) immergée dans la solution de processus, sur lequel un traitement de surface est effectué de la même manière que sur la pièce à usiner, dans lequel un décalage de fréquence du mode d'oscillation propre longitudinal de la tige de détection (2) se produisant pendant le traitement de surface est détecté et la masse de l'éprouvette (7) qui change pendant le traitement de surface en raison d'un dépôt ou d'une abrasion est déterminée à partir du décalage de fréquence,
dans lequel des décalages de fréquence qui sont causés par des gradients de température temporels dans la solution de processus en tant que variable de perturbation sont détectés au moyen d'un dispositif de détection d'influence de perturbation (10) en plus du décalage de fréquence causé par le changement de masse,
**caractérisé en ce que**
- la tige de détection (2) est immergée dans la solution de processus parallèlement à la pièce,
- les décalages de fréquence causés par d'autres variables de perturbation, comprenant des bulles de gaz dans la solution de processus, sont détectés au moyen du dispositif de détection d'influence de perturbation (10), et
- le décalage de fréquence est corrigé en temps réel de l'influence des variables de perturbation en soustrayant une part causée par les perturbations du décalage de fréquence avant de déterminer le changement de masse à partir du décalage de fréquence corrigé.

2. Procédé selon la revendication 1, **caractérisé en ce que** l'apparition de bulles de gaz dans la solution de processus est déterminée optiquement, l'absorption ou la diffusion de lumière étant détectée dans le milieu liquide.

3. Procédé selon la revendication 1, **caractérisé en ce que** la part du décalage de fréquence causée par les variables de perturbation est déterminée en disposant parallèlement au capteur de traitement de surface (1) dans la solution de processus un capteur de référence (15) en forme de tige de construction identique au capteur de traitement de surface (1), dont la surface entière est inerte au traitement de surface par voie chimique humide, dans lequel le capteur de référence (15) présente une pointe de capteur prolongée sous forme de l'éprouvette (7) ou d'une éprouvette inerte par rapport au traitement de surface chimique humide dans la solution de processus, et dans lequel le capteur de référence (15) est excité à des oscillations du même mode d'oscillation propre longitudinale que le capteur de traitement de surface (1) et le décalage de fréquence se produisant au niveau du capteur de référence (15) est soustrait du décalage de fréquence se produisant au niveau du capteur de traitement de surface (1).

4. Procédé selon la revendication 3, **caractérisé en ce qu'**un dépôt externe sans courant est empêché au niveau du capteur de référence (15) par l'application d'un potentiel de protection, un dépôt galvanique est empêché par une isolation électrique au niveau du capteur de référence (15), ou un enlèvement de matière par voie chimique humide au niveau du capteur de référence (15) est empêché par l'utilisation d'une éprouvette (19) d'un matériau ou d'un revêtement résistant à l'enlèvement.

5. Procédé selon l'une quelconque des revendications ci-dessus, **caractérisé en ce que** la détermination de la fréquence de résonance ayant lieu en continu au niveau du capteur de traitement de surface (1) est réalisée **en ce que**
- la phase entre l'excitation d'oscillation et un signal d'oscillation remesuré est contrôlée en continu, ou
- une pluralité de fréquences d'oscillation dans une plage de fréquences prédéterminée est réglée plusieurs fois de manière répétée et l'amplitude et/ou le déphasage sont mesurés pour chaque fréquence d'oscillation, ou
- la tige de capteur (2, 16) est excitée par un signal d'impulsion et le temps de transit de l'impulsion de retour, la fréquence d'un train d'impulsions résultant, ou le déphasage sont mesurés.

6. Dispositif de détection pour la détermination à compensation de perturbations de l'application ou de l'enlèvement de matière lors d'un traitement de surface chimique humide d'une pièce dans une solution de processus selon le procédé selon la revendication 1, présentant :
- au moins un capteur de traitement de surface (1) comprenant une tige de capteur (2) inerte contre une réaction dans la solution de processus, qui est reliée de manière amovible à sa première zone d'extrémité (6) à une éprouvette (7) et à sa seconde zone d'extrémité (3) à un dispositif d'excitation d'oscillation (4) et à un capteur de mesure d'oscillation (5), et un dispositif de commande et de régulation (8) relié au dispositif d'excitation d'oscillation (4) et au capteur de mesure d'oscillation (5) par technologie de signaux, le dispositif de commande et de régulation (8) étant configuré pour exciter la tige de capteur (2) afin qu'elle oscille dans un mode d'oscillation propre longitudinale et pour détecter un décalage de fréquence temporel de ce mode d'oscillation propre,
- une unité d'évaluation (11) avec une unité de calcul de masse (13), et
- un dispositif de détection d'influence de perturbation (10) relié à l'unité d'évaluation (11) par technologie de signaux pour détecter les gradients de température temporels dans la solution de processus qui influencent le décalage de fréquence comme variable de perturbation,
**caractérisé en ce que**
l'unité d'évaluation (11) contient en outre une unité de calcul de compensation (12), et
- le dispositif de détection d'influence de perturbation (10) reliée à l'unité d'évaluation (11) par technologie de signaux est en outre configuré pour détecter le décalage de fréquence sous forme de bulles de gaz dans la solution de processus qui influencent le décalage de fréquence en tant que variable de perturbation supplémentaire, l'unité d'évaluation (11) étant configurée pour pouvoir déterminer en temps réel un décalage de fréquence du mode d'oscillation propre longitudinale corrigé par l'influence des variables de perturbation.

7. Dispositif de détection selon la revendication 6, **caractérisé en ce que** le dispositif de détection d'influence de perturbation (10) présente un capteur de lumière pour la détection photométrique de bulles de gaz dans la solution de processus.

8. Dispositif de détection selon la revendication 7, **caractérisé en ce que** le capteur de lumière est un photomètre à absorption qui est configuré pour mesurer l'intensité lumineuse à différentes longueurs d'onde afin de différencier les substances dissoutes dans la solution de processus et les bulles de gaz formées dans la solution de processus.

9. Dispositif de détection selon la revendication 6, **caractérisé en ce que** le dispositif de détection d'influence de perturbation (10) est un capteur de référence (15) en forme de tige, qui est une tige de capteur de référence (16) de même construction que le capteur de traitement de surface (1), qui est inerte contre une réaction dans la solution de processus et qui est relié à sa première zone d'extrémité (18) à une éprouvette (19) inerte contre une réaction dans la solution de processus et à sa seconde zone d'extrémité (17) à un dispositif d'excitation d'oscillation (4) et à un capteur de mesure d'oscillation (5), et un dispositif de commande et de régulation (22) relié au dispositif d'excitation d'oscillation (4) et au capteur de mesure d'oscillation (5) par technologie des signaux, le dispositif de commande et de régulation (22) étant configuré pour exciter la tige de capteur de référence (16) au moyen du dispositif d'excitation d'oscillation (4) pour qu'elle oscille dans un mode d'oscillation propre longitudinale et pour détecter un décalage de fréquence temporel de ce mode d'oscillation propre au moyen du capteur de mesure d'oscillation (5).

10. Dispositif de détection selon la revendication 9, **caractérisé en ce que** le dispositif de commande et de régulation (8) du capteur de traitement de surface (1) est formé comme un composant indépendant et séparé spatialement du capteur de traitement de surface (1) et/ou le dispositif de commande et de régulation (22) du capteur de référence (15) est formé comme un composant indépendant et séparé spatialement du capteur de référence (15).

11. Utilisation du dispositif de détection conformément à l'une quelconque des revendications 6 à 10 pour enregistrer et documenter une durée de traitement de surface de la pièce.
